# EUROPÄISCHE PATENTSCHRIFT

(11) **EP 1 266 788 B1**
(45) Veröffentlichungstag und Bekanntmachung des Hinweises auf die Patenterteilung: **30.05.2007**
(21) Anmeldenummer: 02009296.1
(22) Anmeldetag: 30.04.2002
(51) Int. Cl.: B60W 10/02, B60W 10/10, B60W 30/18

(54) **Kraftfahrzeug und Verfahren zum Betrieb des Fahrzeugs, insbesondere zum Freischaukeln oder/und Rangieren**
Motor vehicle and method for operating the vehicle, particularly for rocking free and/or manoevering
Véhicule à moteur et méthode d'utilisation de ce véhicule, en particulier pour le dégager et/ou le manoeuvrer en va et vient

(30) Priorität: 15.06.2001 DE 10128853
(43) Veröffentlichungstag der Anmeldung: 18.12.2002
(73) Patentinhaber: ZF Sachs AG, 97424 Schweinfurt (DE)
(72) Erfinder: Kuhstrebe, Jochen, Dipl.-Phys., 97138 Westheim (DE)

(56) Entgegenhaltungen:
- DE-A1- 10 004 179
- DE-A1- 19 939 442
- US-A- 2 485 688
- US-A- 2 615 349

## Beschreibung

Die Erfindung betrifft ein Kraftfahrzeug, welches einen Antriebsstrang mit einer Antriebseinheit, einem Getriebe und einer Kupplungseinrichtung zur Momentenübertragung zwischen der Antriebseinheit und dem Getriebe aufweist, wobei die Kupplungseinrichtung als Mehrfach-Kupplungseinrichtung, insbesondere Doppel-Kupplungseinrichtung, mit einer einer ersten Getriebeeingangswelle zugeordneten ersten Kupplungsanordnung und einer einer zweiten Getriebeeingangswelle zugeordneten zweiten Kupplungsanordnung ausgeführt ist, um eine Abtriebswelle der Antriebseinheit wahlweise mit der ersten oder/und der zweiten Getriebeeingangswelle in Momentenübertragungsverbindung zu bringen, und wobei das Getriebe wenigstens einen Vorwärtsgang und wenigstens einen Rückwärtsgang aufweist, von denen ein der ersten Getriebeeingangswelle zugeordneter Gang und ein der zweiten Getriebeeingangswelle zugeordneter Gang gleichzeitig eingelegt sein können.

Die Erfindung betrifft ferner ein Verfahren zum Betrieb eines derartigen Kraftfahrzeugs und speziell ein Verfahren zum Fahrbereitmachen des Kraftfahrzeugs, wenn dieses festgefahren bzw. steckengeblieben ist, sowie ein Verfahren zum Rangieren des Kraftfahrzeugs.

In jüngerer Zeit haben sogenannte Lastschalt- bzw. Doppelkupplungsgetriebe und Kupplungseinrichtungen für derartige Getriebe, sogenannte Mehrfach- bzw. Doppelkupplungseinrichtungen, ein starkes Interesse gefunden, da sie bei entsprechender Automatisierung einen Fahrkomfort wie bei einem herkömmlichen Automatikgetriebe mit zugeordnetem Drehmomentwandler versprechen, ohne die Verluste eines Drehmomentwandlers hinnehmen zu müssen. Derartige Getriebe- und Kupplungseinrichtungenermöglichen insbesondere ein sequentielles Schalten ohne Zugkraftunterbrechung, wenn beispielsweise die ungradzahligen Vorwärtsgänge der einen Getriebeeingangswelle und die gradzahligen Vorwärtsgänge der anderen Getriebeeingangswelle zugeordnet sind. Einer der beiden Getriebeeingangswellen ist ferner der Rückwärtsgang zugeordnet. Beim normalen Betrieb des Fahrzeugs macht es offensichtlich keinen technischen Sinn, einen Vorwärtsgang und den Rückwärtsgang gleichzeitig eingelegt zu haben; es scheint vielmehr sogar geboten, zur Vermeidung von Beschädigungen gar nicht die Möglicheit zu geben, einen derartigen Getriebebetriebszustand einzulegen.

Der Erfinder hat demgegenüber aber erkannt, dass es durchaus Situationen im Zusammenhang mit dem Betrieb eines Kraftfahrzeugs gibt, bei denen es zweckmäßig sein kann, gleichzeitig einen Vorwärtsgang und den Rückwärtsgang eingelegt zu haben. US-A-2 615 349 offenbart ein Getriebe mit einem ganz speziellen Vorwänsgang für einen Freischaukelmodus, welcher immer züsammen mit dem Rückwärtsgang eingelegt ist. Die Erfindung schlägt demgemäß für das eingangs genannte Kraftfahrzeug vor, dass vermittels einer durch einen Fahrer bedienbaren Bedienanordnung oder/und durch eine das Getriebe und ggf. die Kupplungseinrichtung betätigende Steuereinheit ein Getriebebetriebszustand einstellbar ist, in dem gleichzeitig der der einen Getriebeeingangswelle zugeordnete Rückwärtsgang und ein der anderen Getriebeeingangswelle zugeordneter Vorwärtsgang eingelegt sind, und, dass durch eine zweite Bedienanordnung (32) oder automatisch das Kommands "Änderung der Fahrtrichtung" gegeben werden kann.

Im Zusammenhang mit dem Erfindungsvorschlag wird vor allem an Rangiersituationen gedacht, bei denen das Kraftfahrzeug durch Hin- und Herfahren in Vorwärts- und Rückwärtsrichtung rangiert werden muss. Herkömmlich muss zum Wechsel von der Vorwärtsfahrrichtung zur Rückwärtsfahrrichtung der Vorwärtsgang herausgenommen und der Rückwärtsgang eingelegt werden bzw. umgekehrt. Die entsprechende Getriebebetätigung braucht eine gewisse Zeit, und die Synchronisiereinrichtungen des Getriebes werden hierdurch wiederholt betätigt, so dass entsprechender Verschleiß auftreten kann. Nach dem Erfindungsvorschlag ist es möglich, zwischen der Vorwärtsfahrrichtung und der Rückwärtsfahrrichtung allein durch entsprechende Betätigung der Kupplungseinrichtung zu wechseln, ohne dass ein erneuter Synchronisierungsbedarf innerhalb des Getriebes auftritt. Soweit man von einer Synchronisierung überhaupt sprechen kann, wird diese durch die Kupplungseinrichtung vorgenommen, die in der Regel für länger andauernde Schlupfzustände ausgelegt ist und damit keinem übermäßigen Verschleiß unterliegt.

Der erfindungsgemäße Getriebebetriebszustand, in dem gleichzeitig ein Rückwärtsgang und ein Vorwärtsgang eingelegt sind, kann auch vorteilhaft im Zusammenhang mit einem sogenannten "Freischaukeln" eines festgefahrenen bzw. steckengebliebenen Kraftfahrzeugs ausgenutzt werden. Wie allgemein bekannt sein dürfte, kann ein Fahrzeug, das sich festgefahren hat bzw. das steckengeblieben ist (d. h. die Antriebsräder drehen durch), durch "Freischaukeln" wieder in Gang gesetzt werden. Herkömmlich erfolgt dies bei einem manuellen Schaltgetriebe wie folgt: im 1. oder im Rückwärtsgang wird gegen einen Widerstand angefahren. Dann wird die Kupplung ausgerückt, um entgegen der vorherigen Bewegungsrichtung zurückzurollen. Dann wird wieder gegen das Hindernis angefahren. Ziel ist, dem Fahrzeug durch "Hin- und Herschaukeln" so viel Schwung in einer Richtung zu verleihen, dass das Fahrzeug wieder freikommt. Es besteht aber keine Gewähr, dass beim Auskuppeln das Fahrzeug in die andere Richtung zurückrollt, so dass dann mit etwas Anlauf und Schwung erneut gegen den Widerstand angefahren werden kann. Eine "Freischaukelwirkung" ist deswegen nicht garantiert und kann strenggenommen maximal nur für eine Fahrzeugbewegungsrichtung erhalten werden.

Der erfindungsgemäße Getriebebetriebszustand ermöglicht, dass auch beim Zurückrollen das Fahrzeug in der Rückrollrichtung angetrieben wird. Es kann also in beiden Fahrtrichtungen die "Freischaukelwirkung" erzielt werden, so dass der Anlauf des Fahrzeugs sich bei jeder Hinbewegung und jeder Rückbewegung vergrößert und damit eine hohe Wahrscheinlichkeit besteht, dass das Fahrzeug wieder freikommt.

Aus dem Vorstehenden ergibt sich, dass es besonders zweckmäßig ist, wenn in dem Getriebebetriebszustand mit dem Rückwärtsgang gleichzeitig ein niedriger Vorwärtsgang eingelegt ist, beispielsweise der niedrigste Gang (1.Gang) oder der zweitniedrigste Gang (2. Gang).

Es sollten Sicherheitsmaßnahmen getroffen sein, dass der erfindungsgemäße Betriebszustand nicht versehentlich einstellbar ist. Hierzu wird vorgeschlagen, dass der Getriebebetriebszustand nur einstellbar ist, wenn die Kupplungsanordnungen momentan ausgerückt sind. Ferner wird in diesem Zusammenhang vorgeschlagen, dass der Getriebebetriebszustand nur bei still stehendem Kraftfahrzeug einstellbar ist. Eine besonders hohe Sicherheit gegen Fehlbedienungen wird dann erreicht, wenn der Getriebebetriebzustand nur auf Betätigung einer speziellen, dem Getriebebetriebszustand zugeordneten Bedienanordnung durch den Fahrer einstellbar ist.

Für verschiedene Betriebsweisen des Kraftfahrzeugs, insbesondere für das angesprochene Rangieren und das angesprochene "Freischaukeln", wird vorgeschlagen, dass nach Einstellung des Getriebezustands die Kupplungseinrichtung im Sinne eines Einrückens einer der beiden Kupplungsanordnungen, und dann einmal oder wiederholt im Sinne eines Ausrückens der einen und Einrückens der anderen der beiden Kupplungsanordnungen bzw. im Sinne eines Einrückens der einen und Ausrückens der anderen der beiden Kupplungsanordnungen betätigbar ist. Es wird speziell daran gedacht, dass die Kupplungseinrichtung im Sinne des Ein- und Ausrückens der beiden Kupplungsanordnungen durch den Fahrer unter Vermittlung einer/der Bedienanordnung betätigbar ist. Es ist aber nicht ausgeschlossen, dass man auch einen Automatikmodus vorsieht, in dem die Kupplungseinrichtung im Sinne des Ein- und Ausrückens der beiden Kupplungsanordnungen durch eine Steuereinheit betätigt wird, ohne dass der Fahrer das "Umschalten" zwischen den beiden Kupplungsanordnungen noch einzeln anweisen muss.

Die Bedienanordnung kann vorteilhaft zwei Schalten oder Taster aufweisen, von denen einer dem Einkuppeln der einen und Auskuppeln der anderen Kupplungsanordnung und der andere dem Auskuppeln der einen und Einkuppeln der anderen Kupplungsanordnung zugeordnet ist. Es kann sich beispielsweise um Schalter oder Taster an einem Lenkrad handeln, die ansonsten ein sequentielles Schalten des Getriebes in Hochschalt- bzw. Rückschaltrichtung auslösen. Ferner wird als besonders bevorzugt vorgeschlagen, dass die Bedienanordnung einen im Sinne eines Schwenken oder Verschiebens betätigbaren Bedienhebel aufweist, wobei eine Betätigungsrichtung des Bedienhebels dem Einkuppeln der einen und Auskuppeln der anderen Kupplungsanordnung und eine andere, vorzugsweise zur einen Betätigungsrichtung im Wesentlichen entgegengesetzte Betätigungsrichtung des Bedienhebels dem Auskuppeln der einen und Einkuppeln der anderen Kupplungsanordnung zugeordnet ist. Bei den Bedienhebel kann es sich um den normalen Schalthebel handeln, wobei beispielsweise die gleiche Schaltgasse des Bedienhebels verwendet werden kann, die zum manuell angewiesenen sequentiellen Hoch- bzw. Herunterschalten dient.

Nach einer bevorzugten Ausgestaltung werden die beiden Kupplungsanordnungen derart betätigt oder sind derart betätigbar, dass beim Ausrücken der einen Kupplungsanordnung die andere Kupplungsanordnung schon vor Abschluss des Ausrückvorgangs im Sinne eines Einrückens betätigt wird. Es ist insbesondere vorgesehen, dass die beiden Kupplungsanordnungen derart betätigt werden oder betätigbar sind, dass beim Verlagern des Antriebsmoments der Antriebseinheit von der einen zur anderen Kupplungsanordnung der Antriebstrang nicht vollständig unterbrochen wird. Hierdurch soll erreicht werden, dass beim "Freischaukeln" das Antriebsmoment so weit als möglich verzögerungsfrei zwischen der einen und der anderen Kupplungsanordnung verlagert wird, so dass die Rückroll- bzw. Vorwärtsrollbewegung des Fahrzeugs optimal durch Antriebsmoment von der Antriebseinheit (in der Regel eine Brennkraftmaschine) unterstützt wird.

Die Erfindung stellt neben dem erfindungsgemäßen Kraftfahrzeug ferner ein Verfahren zum Betreiben des Kraftfahrzeugs bereit. Das Verfahren zeichnet sich dadurch aus, dass vermittels einer durch einen Fahrer bedienbaren Bedienanordnung oder/und durch eine das Getriebe und ggf. die Kupplungseinrichtung betätigende Steuereinheit, in Zuordnung zu einer Getriebeeingangswelle ein Rückwärtsgang und in Zuordnung zur anderen Getriebeeingangswelle ein Vorwärtsgang eingelegt wird und dann durch eine zweiten Bedienanordnung oder automatisch die Kupplungseinrichtung derart betätigt wird, dass das Antriebsmoment der Antriebseinheit das Kraftfahrzeug in vorgegebener oder wählbarer Reihenfolge wenigstens einmal über den Vorwärtsgang und wenigstens einmal über den Rückwärtsgang antreibt.

Eine Ausgestaltung des Verfahrens zeichnet sich dadurch aus, dass das Antriebsmoment vom einen zum anderen Gang verlagert wird, wenn ein Radschlupf einen Schwellenwert übersteigt oder/und auf das Kraftfahrzeug wirkende, dem Antriebsmoment entgegenwirkende Gegenkräfte einen Schwellenwert übersteigen. Das Antriebsmoment kann insbesondere dann von einem zum anderen Gang verlagert werden, wenn eine Fahrzeuggeschwindigkeit unter einen Schwellenwert sinkt. Es wird in diesem Zusammenhang insbesondere daran gedacht, das Verfahren zum Fahrbereitmachen des Fahrzeugs zu verwenden, wenn dieses festgefahren bzwk steckengeblieben ist.

Das Verfahren ist aber auch vorteilhaft zum Rangieren des Kraftfahrzeugs verwendbar.

Die Erfindung wird im Folgenden anhand eines Ausführungsbeispiels näher erläutert.

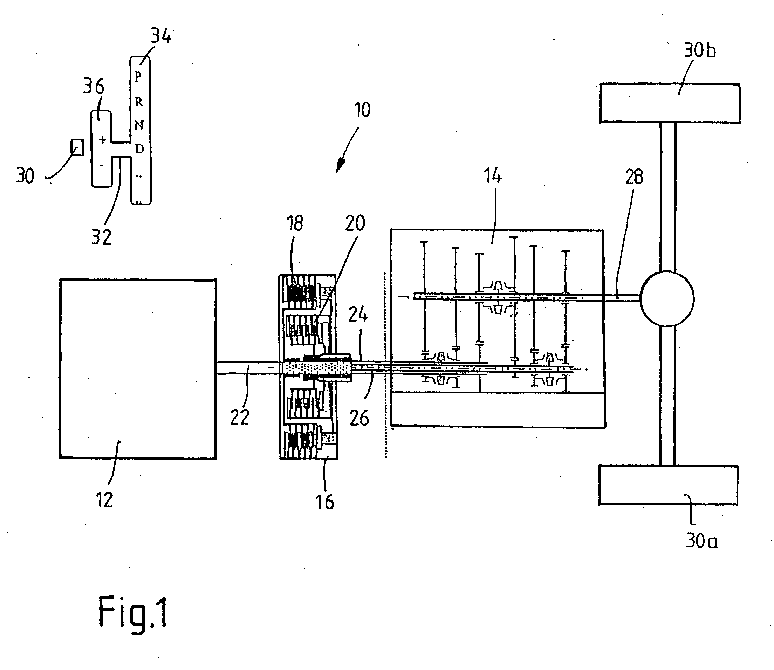

- Fig. 1: zeigt schematisch einen Kraftfahrzeug-Antriebsstrang mit zugeordneten angetriebenen Rädern und einer dem Getriebe und der Kupplungseinrichtung zugeordneten Bedienanordnung.

Fig. 1 zeigt schematisch einen Antriebsstrang 10 mit einer von einer Brennkraftmaschine (Verbrennungsmotor) gebildeten Antriebseinheit 12, einen Doppelkupplungs- oder Lastschaltgetriebe 14 und einer sogenannten Doppelkupplung 16 zwischen der Antriebseinheit und dem Getriebe. Im vorliegenden Fall handelt es sich um eine Doppelkupplung mit zwei nasslaufenden Lamellen-Kupplungsanordnungen 18 und 20, beispielsweise gemäß einer Konstruktion der Anmelderin, wie sie in verschiedenen Patentanmeldungen beschrieben ist, vgl. beispielsweise DE 100 04 179 A1. Es kann sich aber auch um eine trockenlaufende Doppelkupplung handeln.

Die beiden Kupplungsanordnungen sind eingangsseitig mit einer Abtriebswelle 22 der Antriebseinheit und ausgangsseitig mit einer jeweiligen Getriebeeingangswelle 24 bzw. 26 verbunden, wobei wenigstens die Getriebeeingangswelle 24 als Hohlwelle ausgeführt ist, durch die sich die Getriebeeingangswelle 26 erstreckt. Im Getriebe 14 sind verschiedene Getriebezüge der Getriebeeingangswelle 24 und verschiedene Getriebezüge der Getriebeeingangswelle 26 zugeordnet, wie dies an sich bekannt ist. Je nach eingelegtem Getriebegang steht die Getriebeeingangswelle 24 oder/und die Getriebeeingangswelle 26 mit einer Getriebeabtriebswelle 28 in Momentenübertragungsverbindung. An der Getriebeabtriebswelle 28 sind die angetriebenen Räder 30a und 30b angekoppelt, wobei hier von zwei angetriebenen Rädern ausgegangen wird. Die Erfindung ist aber auch auf ein Fahrzeug mit Allradantrieb anwendbar.

Zum sequentiellen Schalten ohne Zugkraftunterbrechung kann sowohl in Zuordnung zur Getriebeeingangswelle 24 als auch in Zuordnung zur Getriebeeingangswelle 26 ein jeweiliger Vorwärtsgang eingelegt werden, wie dies an sich bekannt ist.

Erfindungsgemäß besteht ferner die Möglichkeit, auf der einen Getriebeeingangswelle einen Rückwärtsgang und auf der anderen Getriebeeingangswelle einen Vorwärtsgang einzulegen. Das Gangeinlegen als solches erfolgt durch an sich bekannte Stellglieder. Beim Ausführungsbeispiel können der Vorwärtsgang und der Rückwärtsgang nur dann gleichzeitig eingelegt werden, wenn der Fahrer einen diesem Getriebebetriebsmodus zugeordneten Schalter 30 betätigt. Sicherheitshalber ist ferner vorgesehen, dass dieser Getriebebetriebsmodus nur bei momentan ausgekuppelten Kupplungsanordnungen 18 und 20 und stillstehendem Kraftfahrzeug eingelegt werden kann.

Auf Grundlage des Erfindungsvorschlags kann insbesondere ein sehr effektives "Freischaukeln" des Kraftfahrzeugs erfolgen, wenn dieses auf einem nicht idealen Untergrund festgefahren bzw. steckengeblieben ist. Dadurch, dass im genannten Getriebebetriebsmodus der Vorwärtsgang und der Rückwärtsgang gleichzeitig eingelegt sind, kann durch entsprechende Ansteuerung der Doppelkupplung 16 das Antriebsmoment über das Getriebe in kurzer Folge abwechselnd in Vorwärtsrichtung und in Rückwärtsrichtung wirken, so dass bei jedem Hin- und Rückrollen des Fahrzeugs der Schwung des Fahrzeugs und damit der zurückgelegte Weg zunimmt.

Wie erwähnt, ist der "Freischaukelmodus" (oder alternativ ein "Rangiermodus") durch Aktivierung einer entsprechenden Taste freigebbar. im "Freischaukelmodus" bzw. "Rangiermodus" ist dann auf beiden Getriebeeingangswellen ein Gang eingelegt, und zwar auf der einen, dem Rückwärtsgang zugeordneten Getriebeeingangswelle der Rückwärtsgang und auf der anderen Getriebeeingangswelle ein Vorwärtsgang, vorzugsweise der niedrigste. Es wird dann zum "Freischaukeln" gegen ein Hindernis vorwärts oder rückwärts angefahren, bis ein "Kräftegleichgewicht" zwischen dem Fahrzeug und dem Hindernis besteht, d. h. das Fahrzeug zum Stehen kommt, oder bis der Radschlupf zu groß wird.

Dann kann vom Fahrer mittels einer Bedienanordnung das Kommando "Änderung der Fahrtrichtung" gegeben werden. Es kann sich um eine spezielle Bedienanordnung handeln. Vorzugsweise wird aber der normale Schalthebel dafür verwendet, den Fahrtrichtungsänderungswunsch zu geben. In Fig. 1 ist ein Schalthebel 32 mit zwei Schaltgassen 34 und 36 gezeigt, wobei die Schaltgasse 34 der Schaltgasse eines normalen Automatikgetriebes mit den Schaltpositionen P, R, N, D entspricht und die Schaltgasse 36 zum manuellen Weiterschalten des Getriebes in einer sequentiellen Schaltfolge dient. Diese Schaltgasse 36 kann vorteilhaft auch dafür vorgesehen sein, im "Freischaukelmodus" bzw. im "Rangiermodus" die Doppelkupplung 16 derart anzusteuern, dass die eine Kupplungsanordnung der beiden Kupplungsanordnungen 18 und 20 eingerückt und die andere der beiden Kupplungsanordnungen ausgerückt wird.

Ist keine Schaltgasse in der Art der Schaltgasse 36 vorgesehen, so kann man auch die Schaltgasse 34 für die genannte Ansteuerung der Doppelkupplung verwenden, wobei beispielsweise zwischen R und D umgeschaltet wird, ohne dass beim Durchgang des Hebels durch die Schaltstellung N tatsächlich der Vorwärtsgang und der Rückwärtsgang herausgenommen werden.

Ganz egal, ob man einen gesonderten Hebel für den "Freischaukelmodus" bzw. "Rangiermodus" verwendet oder - wie vorgeschlagen - den normalen Schalthebel dafür vorsieht, ist es sehr zweckmäßig, wenn der Fahrer zum Umschalten zwischen Vorwärtsrichtung und Rückwärtsrichtung nur eine eindimensionale Bewegung ausführen muss.

Es können auch Taster, Schaltwippen oder dergleichen am Lenkrad vorgesehen sein, die vom Fahrer zum Ansteuern der Doppelkupplung im Sinne des Einkuppelns der einen Kupplungsanordnung und des Auskuppelns der anderen Kupplungsanordnung betätigbar sind. Es kann sich um die gleichen Schaltwippen oder Taster handeln, die zum manuellen sequentiellen Schalten des Getriebes verwendbar sind.

Der erfindungsgemäße "Gangwechsel" auf Grundlage einer Verlagerung des Antriebsmoments von der einen Kupplungsanordnung zur anderen Kupplungsanordnung ohne Änderung des Getriebezustands zeichnet sich dadurch aus, dass das "Umschalten" wenig Zeit benötigt, da das Getriebe selbst nicht umgeschaltet wird und dementsprechend Betätigungszeiten von Getriebeaktuatoren usw. entfallen. Für das Freischaukeln" sollte das Umschalten so erfolgen, dass beim Öffnen der einen Kupplung schon kurz vor vollständiger Antriebsstrangunterbrechung die andere Kupplung bereits im Einrücksinne betätigt wird, so dass das Antriebsmoment mit geringstmöglicher Zeitverzögerung vom einen Gang zum anderen Gang verlagert wird, so dass sowohl das "Vorwärtsrollen" des Fahrzeugs als auch das "Rückwärtsrollen" des Fahrzeugs besonders wirkungsvoll, nämlich nur mit minimaler Zeitverzögerung gegenüber dem Zeitpunkt, in dem der Fahrer das Kommando "Änderung der Fahrtrichtung" gegeben hat, durch das Antriebsmoment der Antriebseinheit unterstützt wird. Ein derartiges "schnelles" Umsteuern des Antriebsmoments von der einen Kupplungsanordnung zur anderen Kupplungsanordnung und damit vom Vorwärtsgang zum Rückwärtsgang, bzw. umgekehrt, bietet beim Rangieren eines Kraftfahrzeugs keine besonderen Vorteile. Es kann deshalb vorgesehen sein, dass man die erläuterte "überschneidende" Betätigung nur in Verbindung mit dem "Freischaukelmodus" vorsieht. Hierzu kann die Bedienanordnung dafür ausgeführt sein, dass der Fahrer wahlweise den "Freischaukelmodus" oder den "Rangiermodus" freigibt oder einstellt.

## Patentansprüche

1. Kraftfahrzeug, welches einen Antriebsstrang mit einer Antriebseinheit (12), einem Getriebe (14) und einer Kupplungseinrichtung (16) zur Momentenübertragung zwischen der Antriebseinheit und dem Getriebe aufweist, wobei die Kupplungseinrichtung (16) als Mehrfach-Kupplungseinrichtung, insbesondere Doppel-Kupplungseinrichtung (16), mit einer einer ersten Getriebeeingangswelle (24) zugeordneten ersten Kupplungsanordnung (18) und einer einer zweiten Getriebeeingangswelle (26) zugeordneten zweiten Kupplungsanordnung (20) ausgeführt ist, um eine Abtriebswelle (22) der Antriebseinheit wahlweise mit der ersten oder/und der zweiten Getriebeeingangswelle in Momentenübertragungsverbindung zu bringen, und wobei das Getriebe wenigstens einen Vorwärtsgang und wenigstens einen Rückwärtsgang aufweist, von denen ein der ersten Getriebeeingangswelle zugeordneter Gang und ein der zweiten Getriebeeingangswelle zugeordneter Gang gleichzeitig eingelegt sein können,
**dadurch gekennzeichnet,**
**dass** vermittels einer durch einen Fahrer bedienbaren Bedienanordnung (30) oder/und durch eine das Getriebe (14) und ggf. die Kupplungseinrichtung (16) betätigende Steuereinheit ein Getriebebetriebszustand einstellbar ist, in dem gleichzeitig der der einen Getriebeeingangswelle zugeordnete Rückwärtsgang und ein der anderen Getriebeeingangswelle zugeordneter Vorwärtsgang eingelegt sind, und, dass durch eine zweiten Bedienanordnung (32) oder automatisch das Kommando "Änderung der Fahstrichtung" gegeben werden kann.

2. Kraftfahrzeug nach Anspruch 1, **dadurch gekennzeichnet, dass** mit dem Rückwärtsgang gleichzeitig ein niedriger Vorwärtsgang eingelegt ist.

3. Kraftfahrzeug nach Anspruch 2, **dadurch gekennzeichnet, dass** der niedrige Vorwärtsgang der niedrigste Gang (1. Gang) oder der zweitniedrigste Gang (2. Gang) ist.

4. Kraftfahrzeug nach einem der Ansprüche 1 bis 3, **dadurch gekennzeichnet, dass** der Getriebebetriebszustand nur einstellbar ist, wenn die Kupplungsanordnungen (18, 20) momentan ausgerückt sind.

5. Kraftfahrzeug nach einem der Ansprüche 1 bis 4, **dadurch gekennzeichnet, dass** der Getriebebetriebszustand nur bei still stehendem Kraftfahrzeug einstellbar ist.

6. Kraftfahrzeug nach einem der Ansprüche 1 bis 5, **dadurch gekennzeichnet, dass** der Getriebebetriebszustand nur auf Betätigung einer speziellen, dem Getriebebetriebszustand zugeordneten Bedienanordnung (30) durch den Fahrer einstellbar ist.

7. Kraftfahrzeug nach einem der Ansprüche 1 bis 6, **dadurch gekennzeichnet, dass** nach Einstellung des Getriebezustands die Kupplungseinrichtung (16) im Sinne eines Einrückens einer der beiden Kupplungsanordnungen, und dann einmal oder wiederholt im Sinne eines Ausrückens der einen und Einrückens der anderen der beiden Kupplungsanordnungen bzw. im Sinne eines Einrückens der einen und Ausrückens der anderen der beiden Kupplungsanordnungen betätigbar ist.

8. Kraftfahrzeug nach Anspruch 7, **dadurch gekennzeichnet, dass** die Kupplungseinrichtung durch Betätigung einer/der Bedienanordnung (32) durch den Fahrer im Sinne des Ein- und Ausrückens der beiden Kupplungsanordnungen (18, 20) betätigbar ist.

9. Kraftfahrzeug nach Anspruch 8, **dadurch gekennzeichnet, dass** die Bedienanordnungen zwei Schalter oder Taster aufweist, von denen einer dem Einkuppeln der einen und Auskuppeln der anderen Kupplungsanordnung und der andere dem Auskuppeln der einen und Einkuppeln der anderen Kupplungsanordnung zugeordnet ist.

10. Kraftfahrzeug nach Anspruch 8, **dadurch gekennzeichnet, dass** die Bedienanordnung einen im Sinne eines Schwenken oder Verschiebens betätigbaren Bedienhebel (32) aufweist, wobei eine Betätigungsrichtung des Bedienhebels dem Einkuppeln der einen und Auskuppeln der anderen Kupplungsanordnung und eine andere, vorzugsweise zur einen Betätigungsrichtung im Wesentlichen entgegengesetzte Betätigungsrichtung Bedienhebels dem Auskuppeln der einen und Einkuppeln der anderen Kupplungsanordnung zugeordnet ist.

11. Kraftfahrzeug nach einem der Ansprüche 7 bis 10, **dadurch gekennzeichnet, dass** die beiden Kupplungsanordnungen (18, 20) derart betätigt werden oder betätigbar sind, dass beim Ausrücken der einen Kupplungsanordnung die andere Kupplungsanordnung schon vor Abschluss des Ausrückvorgangs im Sinne eines Einrückens betätigt wird.

12. Kraftfahrzeug nach Anspruch 11, **dadurch gekennzeichnet, dass** die beiden Kupplungsanordnungen derart betätigt werden oder betätigbar sind, dass beim Verlagern des Antriebsmoments der Antriebseinheit von der einen zur anderen Kupplungsanordnung der Antriebstrang nicht vollständig unterbrochen wird.

13. Verfahren zum Betreiben eines Kraftfahrzeugs nach einem der vorhergehenden Ansprüche, **dadurch gekennzeichnet, dass** vermittels einer durch einen Fahrer bedienbaren Bedienanordnung (30) oder/und durch eine das Getriebe (14) und ggf. die Kupplungseinrichtung (16) betätigende Steuereinheit, in Zuordnung zu einer Getriebeeingangswelle ein Rückwärtsgang und in Zuordnung zur anderen Getriebeeingangswelle ein Vorwärtsgang eingelegt wird und dann durch eine zweite Bedienanordnung (32) oder automatisch die Kupplungseinrichtung (16) derart betätigt wird, dass das Antriebsmoment der Antriebseinheit (12) das Kraftfahrzeug in vorgegebener oder wählbarer Reihenfolge wenigstens einmal über den Vorwärtsgang und wenigstens einmal über den Rückwärtsgang antreibt.

14. Verfahren nach Anspruch 13, **dadurch gekennzeichnet, dass** das Antriebsmoment vom einen zum anderen Gang verlagert wird, wenn ein Radschlupf einen Schwellenwert übersteigt oder/und auf das Kraftfahrzeug wirkende, dem Antriebsmoment entgegenwirkende Gegenkräfte einen Schwellenwert übersteigen.

15. Verfahren nach Anspruch 13 oder 14, **dadurch gekennzeichnet, dass** das Antriebsmoment vom einen zum anderen Gang verlagert wird, wenn eine Fahrzeuggeschwindigkeit unter einen Schwellenwert sinkt.

16. Verfahren nach einem der Ansprüche 13 bis 15, **dadurch gekennzeichnet, dass** es zum Fahrbereitmachen des Kraftfahrzeugs verwendet wird, wenn dieses festgefahren bzw. steckengeblieben ist.

17. Verfahren nach einem der Ansprüche 13 bis 15, **dadurch gekennzeichnet, dass** es zum Rangieren des Kraftfahrzeugs verwendet wird.

## Claims

1. Motor vehicle, which comprises a drivetrain with a power unit (12), a transmission (14) and a clutch mechanism (16) for transmitting torque between the power unit and the transmission, the clutch mechanism (16) being embodied as a multiple clutch mechanism, in particular a dual clutch mechanism (16), having a first clutch arrangement (18) associated with a first transmission input shaft (24) and a second clutch arrangement (20) associated with a second transmission input shaft (26), in order to bring an output shaft (22) of the power unit into torque-transmitting connection either with the first or/and the second transmission input shaft, and the transmission comprising at least one forward gear and at least one reverse gear, of which one gear associated with the first transmission input shaft and one gear associated with the second transmission input shaft can be engaged simultaneously, **characterized in that** a transmission operating state, in which the reverse gear associated with one transmission input shaft and a forward gears associated with the other transmission input shaft are simultaneously engaged can be set by means of an operating arrangement (30), which can be operated by a driver, or/and by a control unit actuating the transmission (14) and possibly the clutch mechanism (16), and that the "change direction of travel" command can either be issued by a second operating arrangement (32) or issued automatically.

2. Motor vehicle according to Claim 1, **characterized in that** a low forward gear is engaged simultaneously with the reverse gear.

3. Motor vehicle according to Claim 2, **characterized in that** the low forward gear is the bottom gear (1^{st} gear) or the second gear (2^{nd} gear).

4. Motor vehicle according to any one of Claims 1 to 3, **characterized in that** the transmission operating state can be set only if the clutch arrangements (18, 20) are momentarily disengaged.

5. Motor vehicle according to any one of Claims 1 to 4, **characterized in that** the transmission operating state can be set only when the motor vehicle is stationary.

6. Motor vehicle according to any one of Claims 1 to 5, **characterized in that** the transmission operating state can be set only on actuation by the driver of a special operating arrangement (30) associated with the transmission operating state.

7. Motor vehicle according to any one of Claims 1 to 6, **characterized in that** after setting the transmission state the clutch mechanism (16) can be actuated in order to engage either of the two clutch arrangements, and then operated once or repeatedly in order to disengage one and engage the other of the two clutch arrangements or actuated in order to engage one and disengage the other of the two clutch arrangements.

8. Motor vehicle according to Claim 7, **characterized in that** the clutch mechanism can be actuated through actuation by the driver of a/the operating arrangement (32) in order to engage and disengage the two clutch arrangements (18, 20).

9. Motor vehicle according to Claim 8, **characterized in that** the operating arrangements comprise two switches or pushbuttons, one of which is assigned to the engagement of one and the disengagement of the other clutch arrangement, and the other to the disengagement of one and engagement of the other clutch arrangement.

10. Motor vehicle according to Claim 8, **characterized in that** the operating arrangement comprises an operating lever (32) that can be actuated by swivelling or sliding, one actuating direction of the operating lever being associated with the engagement of one and disengagement of the other clutch arrangement, and another actuating direction of the operating lever, preferably basically opposed to the one actuating direction, being associated with the disengagement of one and engagement of the other clutch arrangement.

11. Motor vehicle according to any one of Claims 7 to 10, **characterized in that** the two clutch arrangements (18, 20) are or can be actuated in such a way that in disengaging one clutch arrangement the other clutch arrangement is already actuated for engagement before the disengagement sequence has been completed.

12. Motor vehicle according to Claim 11, **characterized in that** the two clutch arrangements are or can be actuated in such a way that in shifting the drive torque of the power unit from one clutch arrangement to the other the drivetrain is not completely interrupted.

13. Method for the operation of a motor vehicle according to any one of the preceding Claims, **characterized in that** a reverse gear is engaged in association with one transmission input shaft and a forward gear is engaged in association with the other transmission input shaft by means of an operating arrangement (30), which can be operated by a driver, or/and by a control unit actuating the transmission (14) and possibly the clutch mechanism (16), and the clutch mechanism (16) is then either actuated by a second operating arrangement (32) or is actuated automatically in such a way that the drive torque of the power unit (12) drives the motor vehicle at least once via the forward gear and at last once via the reverse gear in a predefined or selectable order.

14. Method according to Claim 13, **characterized in that** drive torque is shifted from one gear to the other if a wheel slip exceeds a threshold value and/or counteracting forces acting on the motor vehicle in opposition to the drive torque exceed a threshold value.

15. Method according to Claim 13 or 14, **characterized in that** the drive torque is shifted from one gear to the other if a vehicle speed falls below a threshold value.

16. Method according to any one of Claims 13 to 15, **characterized in that** it is used to make the motor vehicle ready to drive if it has become bogged down or stuck.

17. Method according to any one of Claims 13 to 15, **characterized in that** it is used for parking the motor vehicle.

## Revendications

1. Véhicule à moteur présentant une chaîne cinématique comportant un groupe motopropulseur (12), une boîte de vitesses (14) et un dispositif d'embrayage (16) destiné à transmettre le couple entre le groupe motopropulseur et la boîte de vitesses, le dispositif d'embrayage (16) étant réalisé sous la forme d'un dispositif d'embrayage multiple, notamment d'un dispositif d'embrayage double (16), composé d'un premier agencement d'embrayage (18) associé à un premier arbre d'entrée de boîte (24) et d'un deuxième agencement d'embrayage (20) associé à un deuxième arbre d'entrée de boîte (26) afin de mettre en liaison de transmission de couple un arbre de sortie (22) du groupe motopropulseur facultativement avec le premier ou/et le deuxième arbre d'entrée de boîte, et la boîte de vitesses présentant au moins un rapport de marche avant et au moins un rapport de marche arrière, dont un rapport associé au premier arbre d'entrée de boîte et un rapport associé au deuxième arbre d'entrée de boîte peuvent être engagés en même temps,
**caractérisé en ce**
**qu'**un état de fonctionnement de la boîte de vitesses, dans lequel le rapport de marche arrière associé à l'un des arbres d'entrée de boîte et le rapport de marche avant associé à l'autre arbre d'entrée de boîte sont engagés en même temps, peut être réglé au moyen d'un agencement de commande (30) pouvant être commandé par un conducteur ou/et au moyen d'une unité de pilotage actionnant la boîte de vitesses (14) et, le cas échéant, le dispositif d'embrayage (16), et en ce qu'il est possible de donner l'ordre « d'inverser le sens de marche » par l'intermédiaire d'un second agencement de commande (32) ou automatiquement.

2. Véhicule à moteur selon la revendication 1, **caractérisé en ce que**, lorsque le rapport de marche arrière est engagé, un petit rapport de marche avant est engagé en même temps.

3. Véhicule à moteur selon la revendication 2, **caractérisé en ce que** le petit rapport de marche avant est le plus petit rapport (1^{ère} vitesse) ou le deuxième plus petit rapport (2^{ème} vitesse).

4. Véhicule à moteur selon l'une des revendications 1 à 3, **caractérisé en ce que** l'état de fonctionnement de la boîte de vitesses ne peut être réglé que si les agencements d'embrayage (18, 20) sont momentanément désengagés.

5. véhicule à moteur selon l'une des revendications 1 à 4, **caractérisé en ce que** l'état de fonctionnement de la boîte de vitesses ne peut être réglé que si le véhicule à moteur est à l'arrêt.

6. Véhicule à moteur selon l'une des revendications 1 à 5, **caractérisé en ce que** l'état de fonctionnement de la boîte de vitesses ne peut être réglé que par actionnement, par le conducteur, d'un agencement de commande (30) particulier associé à l'état de fonctionnement de la boîte de vitesses.

7. Véhicule à moteur selon l'une des revendications 1 à 6, **caractérisé en ce que**, une fois l'état de de la boîte de vitesses réglé, le dispositif d'embrayage (16) peut être actionné dans le sens d'un engagement de l'un des deux agencements d'embrayage, puis de manière unique ou récurrente, dans le sens d'un désengagement de l'un des deux agencements d'embrayage et d'un engagement de l'autre des deux agencements d'embrayage ou dans le sens d'un engagement de l'un des deux agencements d'embrayage et d'un désengagement de l'autre des deux agencements d'embrayage.

8. Véhicule à moteur selon la revendication 7, **caractérisé en ce que** le dispositif d'embrayage peut être actionné par actionnement par le conducteur d'un agencement de commande ou de l'agencement de commande (32) dans le sens de l'engagement et du désengagement des deux agencements d'embrayage (18, 20).

9. Véhicule à moteur selon la revendication 8, **caractérisé en ce que** l'agencement de commande comporte deux contacteurs ou boutons dont l'un est associé à l'engagement de l'un des agencements d'embrayage et au désengagement de l'autre des agencements d'embrayage et dont l'autre est associé au désengagement de l'un des agencements d'embrayage et à l'engagement de l'autre des agencements d'embrayage.

10. Véhicule à moteur selon la revendication 8, **caractérisé en ce que** l'agencement de commande comporte un levier de commande (32) pouvant être actionné dans le sens d'un pivotement ou d'un coulissement, un sens d'actionnement du levier de commande étant associé à l'engagement de l'un des agencements d'embrayage et au désengagement de l'autre des dispositifs d'embrayage et un autre sens d'actionnement du levier de commande, de préférence sensiblement opposé à un sens d'actionnement, étant associé au désengagement de l'un des agencements d'embrayage et à l'engagement de l'autre des agencements d'embrayage.

11. Véhicule à moteur selon l'une des revendications 7 à 10, **caractérisé en ce que** les deux agencements d'embrayage (18, 20) sont actionnés ou peuvent être actionnés de manière telle que lors du désengagement de l'un des agencements d'embrayage, l'autre agencement d'embrayage soit actionné dans le sens d'un engagement avant même que le mouvement de désengagement ne soit terminé.

12. Véhicule à moteur selon la revendication 11, **caractérisé en ce que** les deux agencements d'embrayage sont actionnés ou peuvent être actionnés de manière telle que, lors du déplacement du couple d'entraînement du groupe motopropulseur de l'un des agencements d'embrayage sur l'autre, la chaîne cinématique ne soit pas complètement interrompue.

13. Procédé permettant de faire fonctionner un véhicule à moteur selon l'une des revendications précédentes, **caractérisé en ce que**, au moyen d'un agencement de commande (30) pouvant être commandé par un conducteur ou/et au moyen d'une unité de pilotage actionnant la boîte de vitesses (14) et, le cas échéant, le dispositif d'embrayage (16), un rapport de marche arrière est engagé en association avec l'un des arbres d'entrée de boîte et qu'un rapport de marche avant est engagé en association avec l'autre arbre d'entrée de boîte, et qu'ensuite, le dispositif d'embrayage (16) est actionné par un deuxième agencement de commande (32) ou automatiquement de telle sente que le couple d'entraînement du groupe motopropulseur (12) propulse le véhicule à moteur dans l'ordre prédéfini ou sélectionnable au moins une fois en rapport de marche avant et au moins une fois en rapport de marche arrière.

14. Procédé selon la revendication 13, **caractérisé en ce que** le couple d'entraînement est déplacé d'un rapport à l'autre lorsqu'un patinage de roue dépasse une valeur de seuil ou/et lorsque des forces antagonistes agissant sur le véhicule à moteur et s'opposant au couple d'entraînement dépassent une valeur de seuil.

15. Procédé selon la revendication 13 ou 14, **caractérisé en ce que** le couple d'entraînement est déplacé d'un rapport à l'autre lorsque la vitesse du véhicule descend au-dessous d'une valeur de seuil.

16. Procédé selon l'une des revendications 13 à 15, **caractérisé en ce qu'**il est utilisé pour redémarrer le véhicule à moteur lorsque celui-ci s'est embourbé.

17. Procédé selon l'une des revendications 13 à 15, **caractérisé en ce qu'**il est utilisé pour manoeuvrer le véhicule à moteur.
